# EUROPEAN PATENT SPECIFICATION

(11) **EP 1 486 530 B1**
(45) Date of publication and mention of the grant of the patent: **10.01.2007**
(21) Application number: 04076704.8
(22) Date of filing: 10.06.2004
(51) Int. Cl.: C08J 9/00, C08J 9/16

(54) **Activated carbon-containing particulate, expandable polystyrene**
Verschäumbare teilchenförmige Styrolpolymerisate enthaltende Aktivkohle
Particules expansibles de polystyrene contenant du charbon actif

(30) Priority: 11.06.2003 NL 1023638
(43) Date of publication of application: 15.12.2004
(73) Proprietor: SYNBRA TECHNOLOGY B.V., 4871 NM Etten-Leur (NL)
(72) Inventor: Noordegraaf, Jan, 6602 ZX Wijchen (NL)
(74) Representative: Valkonet, Rutger

(56) References cited:
- GB-A- 1 138 473
- DATABASE WPI Section Ch, Week 199334 Derwent Publications Ltd., London, GB; Class A94, AN 1993-269896 XP002268797 & JP 05 186626 A (SEKISUI CHEM IND CO LTD) 27 July 1993 (1993-07-27)
- DATABASE WPI Section Ch, Week 198314 Derwent Publications Ltd., London, GB; Class A96, AN 1983-33035K XP002268798 & JP 58 031987 A (CHIYODA CHEM ENG CONSTR CO) 24 February 1983 (1983-02-24)

## Description

Particulate, expandable polystyrene (EPS), method for preparing particulate, expandable polystyrene as well as a special use of polystyrene foam material.

The present invention relates to a particulate, expandable polystyrene (EPS) which can be processed into a foam having a fine cell structure and a low density and which, in order to improve the thermal insulation value thereof, contains a thermal insulation value-increasing material. The present invention furthermore relates to a method for preparing a particulate, expandable polystyrene (EPS), as well as to a polystyrene-based foam material.

British patent GB 1,138,473 relates to a method for manufacturing thermoplastic foams, especially polystyrene foam of polymers and copolymers of styrene, which foams are directly expanded. The method that is known from said British patent application comprises the introduction of an expansion fluid into a molten polymer composition containing porous particles of an inorganic material, which method can be carried out in an extruder. A gas or a liquid, e.g. carbon dioxide, nitrogen and an alkyl halogenide may be used as a suitable expansion agent; the examples only describe the use of methyl chloride. The density of the foam material that is thus directly obtained as a plate from the extruder has a value of 0.02 or even lower. Examples of inorganic materials, which are used as nucleators, include: alumina, silica, activated carbon, kaolin and magnesia. Although Example IV describes the preparation of a polystyrene foam with the addition of active carbon, no further details with regard to the active carbon, in particular the particle size thereof, is provided, nor are any further details provided with regard to the styrene polymer, in particular the particle size thereof.

Japanese patent publication JP 05 186626 relates to a composition obtained by impregnating an inorganic gas into a resin composition containing a thermoplastic resin and porous bodies having an average particle size of up to 500 µm. A number of thermoplastic resins, among which a polystyrene-type resin, are known from said document, which mentions inter alia active carbon, besides zeolite, silica gel, clay and the like as porous bodies. Further details with regard to the active carbon and the styrene polymer to be used are not known therefrom.

Japanese patent publication JP 58 031987 relates to a foamed synthetic resin granule, to the surface of which one or more (in)organic materials are attached; in said document, polystyrene, amongst other materials, is mentioned as the synthetic resin. Active carbon, for example, besides other materials, such as zeolite, aluminium oxide or ceramic materials, may be used as the inorganic material. Such a material may be used in the processing of waste water, in which microorganisms attach to such a granule.

A method for increasing the thermal insulation value of EPS is known per se from International application WO 00/43442, wherein styrene polymer is melted in an extruder and mixed with at least a foaming agent and aluminium particles, mainly in the form of platelets, and extruded together therewith, the aluminium particles being present in an amount of maximally 6 wt.%, after which the extruded material is cooled and reduced into particles. Such polymers contain at least particulate aluminium so as to improve the thermal insulation properties thereof, the aluminium particles being homogeneously distributed and incorporated as an infrared radiation-reflecting material. The aluminium particles have a plate-like shape, with dimensions varying from 1 to 15 µm.

From European patent application No. 1 031 610 there is known a particulate, expandable polystyrene wherein the EPS particles are coated with 0.001-0.5 wt.% of a hydrophobic agent, in particular paraffin wax, wherein the EPS particles furthermore contain 0.5-8 wt.% of graphite. From said European patent application it is furthermore known that other suitable agents for enhancing the thermal insulation value may be added, such as aluminium powder, metal oxides, such as iron oxide and aluminium oxide, and carbon particles, such as soot.

From European patent application No. 1 031 610 there is known a foam panel exhibiting a reduced thermal conductivity, which panel contains 0.5-5.0 wt.% of graphite particles having an average particle size from 1 to 100 µm.

The starting material used for preparing expandable polystyrene (EPS) can be obtained not only by means of the extrusion process, as known from the aforesaid International application, but also by means of suspension polymerisation. The EPS granulated material thus obtained is generally used as a starting material in the packaging industry and in the construction industry. The method for the further processing comprises a prefoaming treatment, in which an amount of steam is passed through a layer of EPS granules in an expansion vessel, causing the foaming agent present in the EPS granules, usually pentane, to evaporate, resulting in foaming of the granules. After a storage period of about 4-48 hours, also referred to as maturing, the thus prefoamed granules are charged to a mould, in which further expansion of the granules takes place under the influence of steam. The mould that is used for this purpose is provided with small openings, so that the foaming agent that is still present can escape during the expansion process whilst the granules fuse into the desired shape. In principle, there are no limitations as regards the dimensions of the product thus formed, and it is possible to form blocks for the construction industry as well as meat dishes or fish boxes.

In the production of EPS granules by means of the polymerisation process, a particle size having a so-called Gauss distribution is obtained, generally over a range from 0.2 to 2.5 mm. In practice it has become apparent that the fraction having a particle size < 0.3 mm is in fact unsuitable for normal packaging material, and that particles having a particle size < 0.6 mm are not suitable for construction purposes. Although it is possible to influence the particle size within certain ranges during the suspension polymerisation, there will in principle always be a number of residual fractions, viz. small particles having a particle size < 0.3 mm and large particles having a particle size > 2.4 mm. Since such residual fractions still contain valuable materials, the present Applicant has already developed a method for recycling said materials in an extruder before. The starting material, viz. residual fraction having a small or a large particle size, is fed to the extruder, with all of the foaming agent exiting the starting material during the extrusion process, which foaming agent is discharged via a vent port mounted on the extruder and combusted in an integrated post-combustion process, during which process steam may be generated. The granulated material, from which the foaming agent has thus been removed, is carried out of the extruder via a heated extrusion head and chopped into small particles. A problem that occurs with such a recycling process is that the expandable polystyrene (EPS) frequently comprises fire retardants besides foaming agent, which fire retardants start to decompose at the temperatures that prevail in the extruder, separating halogen radicals, as a result of which the chain length of polystyrene is undesirably reduced. In addition, the formation of halogen gas may furthermore lead to corrosion of the extruder. Thus, the residual fractions are not recycled as 100% material.

A first aspect of the present invention is to provide a particulate, expandable polystyrene (EPS), wherein EPS foam is obtained after further processing, which EPS foam has a sufficiently low thermal conductivity coefficient that is desirable in practice in order to provide the intended thermal insulation properties.

Another aspect of the present invention is to provide a method for preparing expandable polystyrene (EPS) granules, wherein styrene polymers can be converted, in the presence of one or more additional components, into a material which, after foaming and moulding, has an increased thermal insulation value.

Another aspect of the present invention is to provide a method for preparing expandable polystyrene (EPS) granules, wherein the EPS granules have a density of about 1000 kg/m³, which density is less than 100 kg/m³ after foaming or expanding.

Yet another aspect of the present invention is to provide a particulate, expandable polystyrene (EPS) foam which, in its final form after foaming and moulding, also meets the fire resistance requirements of the B2-test, viz. DIN 4102, part 2.

The invention as referred to in the introduction is characterized in that active carbon having a particle size ≤ 12 µm is present in the polystyrene particles as the thermal insulation value-increasing material.

One or more aspects of the present invention are met by using active carbon as a thermal insulation value-increasing material. The EPS granules obtained in accordance with the present invention have a density of 850-1050 kg/m³; after expansion, a material having a density of 9-100 kg/m³, in particular 15-30 kg/m³, is obtained.

In order to obtain a particulate, expandable polystyrene (EPS) that has an increased thermal insulation value, it is in particular desirable for the active carbon to have a particle size ≤ 12 µm, in particular a particle size ≤ 8 µm, especially a particle size ≤ 5 µm.

In a special embodiment, a desirable amount of active carbon is 1-15 wt.%, based on the amount of styrene polymer, preferably, the amount of active carbon is 2-10 wt.%, in particular 3-8 wt.%, based on the amount of styrene polymer.

It should be understood that it is desirable in specific embodiments that additionally one or more other thermal insulation value-increasing materials selected from the group consisting of graphite, aluminium powder, Al(OH)₃, Mg(OH)₂ and Al₂O₃, iron, zinc, copper and alloys thereof are present in particulate, expandable polystyrene.

Using the present method, it has appeared to be possible to process styrene polymer having a particle size < 0.3 mm in an extruder without any problems worth mentioning. In certain embodiments it is also possible, on the other hand, to use a styrene polymer having a particle size > 2.4 mm. In a specific embodiment, it is moreover desirable to use styrene polymer having a particle size of 0.7-1.0 mm, a particle size of 1.0-2.4 mm, or a combination thereof.

To obtain an expandable polystyrene (EPS) that exhibits a sufficient fire-retardant action, the styrene polymer preferably comprises a fire retardant, in particular hexabromine cyclododecane (HBCD), before the extrusion takes place.

When the product obtained after extrusion is to meet stringent fire safety requirements, it is preferable to additionally feed one or more fire retardants selected from the group consisting of hexabromine cyclododecane (HBCD), dicumyl peroxide and 2.3-dimethyl-2.3-diphenyl butane separately to the extruder during the extrusion process, the amount of said fire retardants ranging between 1.0 and 8 wt.%, based on the amount of styrene polymer.

In certain embodiments, in order to obtain an even better thermal insulation value, the particulate, expandable polystyrene (EPS) obtained after extrusion preferably comprises one ore more of the materials from the group consisting of graphite, aluminium powder, Al(OH)₃, Mg(OH)₂ and Al₂O₃, iron, zinc, copper and alloys thereof.

The invention further relates to a method for preparing the particulate, expandable polystyrene (EPS), which method is characterized in that styrene polymer is fed to an extruder and mixed with at least a foaming agent and active carbon and subsequently extruded, cooled and reduced into particles. The material thus obtained functions as a starting material for the foaming and moulding process.

In a special embodiment it is possible to feed a styrene polymer to an extruder together with active carbon for the purpose of preparing a particulate, expandable polystyrene, after which the intermediate material thus obtained is subjected to an impregnation treatment with a foaming agent so as to obtain particles comprising a foaming agent.

The active carbon used in the present method has a particle size ≤ 12 µm, in particular ≤ 8 µm, especially ≤ 5 µm.

The method for preparing expandable polystyrene comprises the addition of active carbon in an amount of 1-15 wt.%, preferably in an amount of 2-10 wt.%, in particular in an amount of 3-8 wt.%, based on the amount of styrene polymer.

If the amount of active carbon is lower than 1 wt.%, the increase of the thermal insulation value that is obtained is insufficient. If an amount higher than 15 wt.% is used, no additional effect is observed.

The present invention further relates to a polystyrene foam material based on particulate, expandable polystyrene as described above, which polystyrene foam material is preferably used for thermal insulation purposes.

The present invention will now be explained by means of a number of examples and comparative examples, in which connection it should be noted that the present invention is by no means limited to such special examples.

### Comparative Example 1.

A foaming agent, styrene polymer, hexabromine cyclododecane (HBCD), dicumyl peroxide and possibly dicumyl were fed to an extruder, and a certain amount of an additive was jointly extruded therewith to increase the thermal insulation value. The obtained results are summarized in the table below. In Comparative Example 1, no additive was extruded together with the other materials, and the obtained lambda value was 0.03524 W/mK.

### Comparative Example 2.

The same operations as described in Comparative Example 1 were carried out, except that 4.0 wt.% of soot having a dimension of 50 nm was extruded together with the other materials.

### Comparative Example 3.

The same operations as described in Comparative Example 2 were carried out, except that the amount of soot was increased to 6 wt.%.

### Comparative Example 4.

The same operations as described in Comparative Example 2 were carried out, except that an amount of soot of 10.0 wt.% was fed to the extruder.

### Comparative Example 5.

The same operations as described in Comparative Example 1 were carried out, except that a metered amount of 2.0 wt.% of active carbon (in the form of a 2 mm pellet) was extruded together with the other materials.

### Comparative Example 6.

The same operations as described in Comparative Example 5 were carried out, except that the amount of active carbon was increased to 5.0 wt.%.

### Comparative Example 7.

The same operations as described in Comparative Example 5 were carried out, except that the amount of active carbon was increased to 8.0 wt.%.

### Comparative Example 8.

The same operations as described in Comparative Example 5 were carried out, except that active carbon was added in the form of a powder having a particle size of 60 µm.

### Comparative Example 9.

The same operations as described in Comparative Example 8 were carried out, except that active carbon was added in an amount of 5.0 wt.%.

### Comparative Example 10.

The same operations as described in Comparative Example 8 were carried out, except that active carbon was added in an amount of 8.0 wt.%.

### Comparative Example 11.

The same operations as described in Comparative Example 8 were carried out, except that active carbon was added in an amount of 10.0 wt.%.

### Example 1.

The same operations as described in Comparative Example 8 were carried out, except that an amount of 2.0 wt.% of active carbon having a particle size of 10 µm was extruded together with the other materials.

### Example 2.

The same operations as described in Example 1 were carried out, except that the amount of active carbon was increased to 5.0 wt.%.

### Example 3.

The same operations as described in Example 1 were carried out, except for the fact that the amount of active carbon was increased to 8.0 wt.%.

### Example 4.

The same operations as described in Example 1 were carried out, except that an amount of 2.0 wt.% of active carbon having a particle size of 5 µm was extruded together with the other materials.

### Example 5.

The same operations as described in Example 4 were carried out, except that the amount of active carbon was increased to 5.0 wt.%.

### Example 6.

The same operations as described in Example 4 were carried out, except that the amount of active carbon was increased to 8.0 wt.%.

### Example 7.

The same operations as described in Example 1 were carried out, except that an amount of 2.0 wt.% of active carbon having a particle size of 3 µm was extruded together with the other materials.

### Example 8.

The same operations as described in Example 7 were carried out, except that the amount of active carbon was increased to 5.0 wt.%.

### Example 9.

The same operations as described in Example 7 were carried out, except that the amount of active carbon was increased to 8.0 wt.%.

### Example 10.

The same operations as described in Example 7 were carried out, except that the amount of active carbon was increased to 10.0 wt.%.

### Example 11.

The same operations as described in Example 1 were carried out, except that an amount of 2.0 wt.% of active carbon having a particle size of 2 µm was extruded together with the other materials.

### Example 12.

The same operations as described in Example 11 were carried out, except that the amount of active carbon was increased to 5.0 wt.%.

### Example 13.

The same operations as described in Example 11 were carried out, except that the amount of active carbon was increased to 5.0 wt.%, and that in addition 0.3 wt.% of dicumyl was used instead of 0.3 wt.% of dicumyl peroxide.

### Example 14.

The same operations as described in Example 13 were carried out, except that the amount of active carbon was increased to 10.0 wt.%.

### Example 15.

The same operations as described in Example 7 were carried out, except that the amount of active carbon was increased to 2.5 wt.%, and that additionally 2.5 wt.% of graphite powder having a particle size of 2 µm was added.

### Example 16.

The same operations as described in Example 13 were carried out, except that the amount of active carbon was increased to 2.5 wt.%, and that the active carbon had a particle size of 3 µm. Furthermore, 2.5 wt.% of graphite powder having a particle size of 2 µm was added.

### Example 17.

The same operations as described in Example 8 were carried out, except that the particulate, expandable polystyrene was obtained by means of an extrusion process, with the metering of the foaming agent, in particular pentane, taking place via the suspension route.

**Table**

| Example No. | wt.% HBCD | wt.% Dicumyl peroxide | wt.% Dicumyl | wt.% Addition | Lambda value W/mK. 15 g/l | Lambda value W/mK. 20 g/l | B2 test | Maturing time hour |
|---|---|---|---|---|---|---|---|---|
| Comp. Ex. 1 | 0.8 | 0.3 | | 0.00 | | 0.03524 | | |
| Comp. Ex. 2 | 0.8 | 0.3 | | 4.00 | | 0.03300 | | |
| Comp. Ex. 3 | 0.8 | 0.3 | | 6.00 | | 0.03228 | | |
| Comp. Ex. 4 | 0.8 | 0.3 | | 10.00 | | 0.0310 | yes | |
| Comp. Ex. 5 | 0.8 | 0.3 | | 2.0 | | 0.0360 | | |
| Comp. Ex. 6 | 0.8 | 0.3 | | 5.0 | | 0.0355 | | |
| Comp. Ex. 7 | 0.8 | 0.3 | | 8.0 | | 0.0350 | yes | |
| Comp. Ex. 8 | 0.8 | 0.3 | | 2.0 | | 0.0360 | | |
| Comp. Ex. 9 | 0.8 | 0.3 | | 5.0 | | 0.0355 | | |
| comp. Ex. 10 | 0.8 | 0.3 | | 8.0 | | 0.0350 | | |
| Comp. Ex. 11 | 0.8 | 0.3 | | 10.0 | | 0.0349 | yes | |
| Example 1 | 0.8 | 0.3 | | 2.0 | | 0.0335 | | |
| Example 2 | 0.8 | 0.3 | | 5.0 | | 0.0320 | | |
| Example 3 | 0.8 | 0.3 | | 8.0 | | 0.0320 | yes | |
| Example 4 | 0.8 | 0.3 | | 2.0 | | 0.0335 | | |
| Example 5 | 0.8 | 0.3 | | 5.0 | | 0.0320 | | |
| Example 6 | 0.8 | 0.3 | | 8.0 | | 0.0320 | yes | |
| Example 7 | 0.8 | 0.3 | | 2.0 | | 0.0330 | | |
| Example 8 | 0.8 | 0.3 | | 5.0 | 0.033 | 0.0300 | | |
| Example 9 | 0.8 | 0.3 | | 8.0 | 0.032 | 0.0300 | | |
| Example 10 | 0.8 | 0.3 | | 10.0 | 0.0320 | 0.0295 | yes | |
| Example 11 | 0.8 | 0.3 | | 2.0 | | 0.0330 | | |
| Example 12 | 0.8 | 0.3 | | 5.0 | 0.033 | 0.0305 | yes | |
| Example 13 | 0.8 | | 0.3 | 5.0 | 0.032 | 0.0305 | | |
| Example 14 | 0.8 | | 0.3 | 10.0 | 0.0320 | 0.0305 | yes | |
| Example 15 | 0.8 | 0.3 | | 2.5 +2.5 | | 0.0305 | yes | 6 |
| Example 16 | 0.8 | | 0.3 | 2.5 +2.5 | | 0.0305 | yes | 6 |
| Example 17 | 0.8 | 0.3 | | 5.0 | | 0.0320 | yes | 6 |

From the above table it is apparent that particulate, expandable polystyrene having an increased thermal insulation value is obtained when active carbon having a particle size ≤ 12 µm is used. Very good results are obtained when the particle size is further reduced, in particular to a value of 5 or 3 µm. From the above table it furthermore follows that the amount of active carbon is preferably 1-15 wt.%, in particular 2-10 wt.%, especially 3-8 wt.%, based on the amount of styrene polymer.

## Claims

1. A particulate, expandable polystyrene (EPS) which can be processed into a foam having a fine cell structure and a low density and with, in order to improve the thermal insulation value thereof, a thermal insulation value-increasing material, **characterized in that** active carbon having a particle size ≤ 12 µm. is present in the polystyrene particles as said thermal insulation value-increasing material.

2. A particulate, expandable polystyrene (EPS) according to claim 1, **characterized in that** the active carbon has a particle size ≤ 8 µm.

3. A particulate, expandable polystyrene (EPS) according to claims 1-2, **characterized in that** the active carbon has a particle size ≤ 5 µm.

4. A particulate, expandable polystyrene (EPS) according to any one or more of the preceding claims 1-3, **characterized in that** the amount of active carbon is 1-15 wt.%, based on the amount of styrene polymer.

5. A particulate, expandable polystyrene (EPS) according to claim 4, **characterized in that** the amount of active carbon is 2-10 wt.%.

6. A particulate, expandable polystyrene (EPS) according to claims 4-5, **characterized in that** the amount of active carbon is 3-8 wt.%, based on the amount of styrene polymer.

7. A particulate, expandable polystyrene (EPS) according to any one or more of the preceding claims, **characterized in that** additionally one or more other thermal insulation value-increasing materials selected from the group consisting of graphite, aluminium powder, Al(OH)₃, Mg(OH)₂ and Al₂O₃, iron, zinc, copper and alloys thereof are present in particulate, expandable polystyrene.

8. A particulate, expandable polystyrene (EPS) according to any one or more of the preceding claims, **characterized in that** the styrene polymer has a particle size < 0.3 mm.

9. A particulate, expandable polystyrene (EPS) according to any one or more of the claims 1-7, **characterized in that** the styrene polymer has a particle size > 2.4 mm.

10. A particulate, expandable polystyrene (EPS) according to any one or more of the claims 1-6, **characterized in that** the styrene polymer has a particle size from 0.7 to 1.0 mm.

11. A particulate, expandable polystyrene (EPS) according to any one or more of the claims 1-6, **characterized in that** the styrene polymer has a particle size from 1.0 to 2.4 mm.

12. A particulate, expandable polystyrene (EPS) according to any one or more of the preceding claims, **characterized in that** one or more fire retardants selected from the group consisting of hexabromine cyclododecane (HBCD), dicumyl peroxide and 2.3-dimethyl-2.3-diphenyl butane are present in the styrene polymer.

13. A particulate, expandable polystyrene (EPS) according to any one or more of the preceding claims, **characterized in that** the density of the EPS is from 850 to 1050 kg/m³.

14. A method for preparing a particulate, expandable polystyrene (EPS) according to any one or more of the claims 1-13, **characterized in that** a styrene polymer is fed to an extruder and mixed with at least a foaming agent and active carbon having a particles size ≤12 µm and subsequently extruded, cooled and reduced into particles.

15. A method for preparing a particulate, expandable polystyrene (EPS) according to any one or more of the claims 1-13, **characterized in that** a styrene polymer is fed to an extruder together with active carbon having a particles size ≤12 µm, after which the intermediate material thus obtained, which has been reduced into particles after cooling, is subjected to an impregnation treatment with a foaming agent so as to obtain a material which is cooled and which comprises a foaming agent.

16. A method according to any one or more of the claims 14-15, **characterized in that** active carbon having a particle size ≤ 8 µm is used.

17. A method according to any one or more of the claims 14-16, **characterized in that** active carbon having a particle size ≤ 5 µm is used.

18. A method for preparing an expandable polystyrene according to any one or more of the claims 14-17, **characterized in that** active carbon is added in an amount of 1-15 wt.%, based on the amount of styrene polymer.

19. A method according to claim 18, **characterized in that** active carbon is added in an amount of 2-10 wt.%, based on the amount of styrene polymer.

20. A method according to claim 18, **characterized in that** active carbon is added in an amount of 3-8 wt.%, based on the amount of styrene polymer.

21. A method according to any one or more of the claims 14-20, **characterized in that** the EPS has a density of 850-1050 kg/m³.

22. A polystyrene foam material on basis of a particulate, expandable polystyrene according to claims 1-13, **characterized in that** the foam material has a density of 9-100 kg/m³ after expansion thereof.

23. A polystyrene foam material according to claim 22, **characterized in that** the foam material has a density of 15-30 kg/m³ after expansion thereof.

24. Use of a polystyrene foam material according to any one or more of the claims 22-23 for thermal insulation purposes.

## Patentansprüche

1. Partikelförmiges expandierbares Polystyrol (EPS), das zu einem Schaum mit einer feinen Zellstruktur und einer niedrigen Dichte verarbeitet werden kann und zur Verbesserung des Wärmeisolationswertes ein den Wärmeisolationswert erhöhendes Material aufweist, **dadurch gekennzeichnet, dass** Aktivkohle mit einer Partikelgröße ≤ 12µm in den Polystyrolpartikeln als den Wärmeisolationswert erhöhendes Material vorhanden ist.

2. Partikelförmiges expandierbares Polystyrol (EPS) nach Anspruch 1, **dadurch gekennzeichnet, dass** die Aktivkohle eine Partikelgröße ≤ 8µm besitzt.

3. Partikelförmiges expandierbares Polystyrol (EPS) nach den Ansprüchen 1-2, **dadurch gekennzeichnet, dass** die Aktivkohle eine Partikelgröße ≤ 5µm besitzt.

4. Partikelförmiges expandierbares Polystyrol (EPS) nach einem oder mehreren der vorangehenden Ansprüche 1-3, **dadurch gekennzeichnet, dass** die Menge der Aktivkohle 1-15 Gew% auf der Basis der Menge des Styrolpolymers beträgt.

5. Partikelförmiges expandierbares Polystyrol (EPS) nach Anspruch 4, **dadurch gekennzeichnet, dass** die Menge der Aktivkohle 2-10 Gew% beträgt.

6. Partikelförmiges expandierbares Polystyrol (EPS) nach den Ansprüchen 4-5, **dadurch gekennzeichnet, dass** die Menge der Aktivkohle 3-8 Gew% auf der Basis der Menge des Styrolpolymers beträgt.

7. Partikelförmiges expandierbares Polystyrol (EPS) nach einem oder mehreren der vorangehenden Ansprüche, **dadurch gekennzeichnet, dass** zusätzlich ein oder mehrere andere den Wärmeisolationswert erhöhende Materialien, die aus der aus Graphit, Aluminiumpulver, Al(OH)₃, Mg(OH)₂ und Al₂O₃, Eisen, Zink, Kupfer und Legierungen hiervon bestehenden Gruppe ausgewählt sind, im partikelförmigen expandierbaren Polystyrol vorhanden sind.

8. Partikelförmiges expandierbares Polystyrol (EPS) nach einem oder mehreren der vorangehenden Ansprüche, **dadurch gekennzeichnet, dass** das Styrolpolymer eine Partikelgröße < 0,3 mm besitzt.

9. Partikelförmiges expandierbares Polystyrol (EPS) nach einem oder mehreren der Ansprüche 1-7, **dadurch gekennzeichnet, dass** das Styrolpolymer eine Partikelgröße > 2,4 mm besitzt.

10. Partikelförmiges expandierbares Polystyrol (EPS) nach einem oder mehreren der Ansprüche 1-6, **dadurch gekennzeichnet, dass** das Styrolpolymer eine Partikelgröße von 0,7 - 1,0 mm besitzt.

11. Partikelförmiges expandierbares Polystyrol (EPS) nach einem oder mehreren der Ansprüche 1-6, **dadurch gekennzeichnet, dass** das Styrolpolymer eine Partikelgröße von 1,0-2,4 mm besitzt.

12. Partikelförmiges expandierbares Polystyrol (EPS) nach einem oder mehreren der vorangehenden Ansprüche, **dadurch gekennzeichnet, dass** ein oder mehrere feuerhemmende Mittel, die aus der aus Hexabromcyclododecan (HBCD), Dicumylperoxid und 2.3-Dimethyl-2.3-diphenylbutan bestehenden Gruppe ausgewählt sind, im Styrolpolymer vorhanden sind.

13. Partikelförmiges expandierbares Polystyrol (EPS) nach einem oder mehreren der vorangehenden Ansprüche, **dadurch gekennzeichnet, dass** die Dichte des EPS von 850-1050 kg/m³ reicht.

14. Verfahren zur Herstellung eines partikelförmigen expandierbaren Polystyrols (EPS) nach einem oder mehreren der Ansprüche 1-13, **dadurch gekennzeichnet, dass** ein Styrolpolymer einem Extruder zugeführt und mit mindestens einem Schaummittel und Aktivkohle mit einer Partikelgröße ≤ 12 µm vermischt und danach extrudiert, abgekühlt und zu Partikeln reduziert wird.

15. Verfahren zur Herstellung eines partikelförmigen expandierbaren Polystyrols (EPS) nach einem oder mehreren der Ansprüche 1-13, **dadurch gekennzeichnet, dass** ein Styrolpolymer zusammen mit Aktivkohle mit einer Partikelgröße ≤ 12 µm einem Extruder zugeführt wird, wonach das auf diese Weise erhaltene Zwischenmaterial, das nach dem Abkühlen zu Partikeln reduziert wurde, einer Imprägnierbehandlung mit einem Schaummittel unterzogen wird, um ein Material zu erhalten, das abgekühlt ist und ein Schaummittel enthält.

16. Verfahren nach einem oder mehreren der Ansprüche 14-15, **dadurch gekennzeichnet, dass** Aktivkohle mit einer Partikelgröße ≤ 8 µm verwendet wird.

17. Verfahren nach einem oder mehreren der Ansprüche 14-16, **dadurch gekennzeichnet, dass** Aktivkohle mit einer Partikelgröße ≤ 5 µm verwendet wird.

18. Verfahren zur Herstellung eines expandierbaren Polystyrols nach einem oder mehreren der Ansprüche 14-17, **dadurch gekennzeichnet, dass** Aktivkohle in einer Menge von 1-15 Gew% auf der Basis der Menge des Styrolpolymers zugesetzt wird.

19. Verfahren nach Anspruch 18, **dadurch gekennzeichnet, dass** Aktivkohle in einer Menge von 2-10 Gew% auf der Basis der Menge des Styrolpolymers zugesetzt wird.

20. Verfahren nach Anspruch 18, **dadurch gekennzeichnet, dass** Aktivkohle in einer Menge von 3-8 Gew% auf der Basis der Menge des Styrolpolymers zugesetzt wird.

21. Verfahren nach einem oder mehreren der Ansprüche 14-20, **dadurch gekennzeichnet, dass** das EPS eine Dichte von 850-1050 kg/m³ besitzt.

22. Polystyrolschaummaterial auf der Basis eines partikelförmigen expandierbaren Polystyrols nach den Ansprüchen 1-13, **dadurch gekennzeichnet, dass** das Schaummaterial nach seiner Expansion eine Dichte von 9-100 kg/m³ besitzt.

23. Polystyrolschaummaterial nach Anspruch 22, **dadurch gekennzeichnet, dass** das Schaummaterial nach seiner Expansion eine Dichte von 15-30 kg/m³ besitzt.

24. Verwendung eines Polystyrolschaummaterials nach einem oder mehreren der Ansprüche 22-23 für Wärmeisolationszwecke.

## Revendications

1. Particules expansibles de polystyrène (EPS), qui peuvent être traitées en une mousse ayant une fine structure cellulaire et une faible densité et avec, afin d'améliorer sa valeur d'isolation thermique, un matériau augmentant la valeur d'isolation thermique, **caractérisées en ce que** du charbon actif ayant une taille des particules ≤ 12 µm, est présent dans les particules de polystyrène en tant que matériau augmentant la valeur d'isolation thermique.

2. Particules expansibles de polystyrène (EPS) selon la revendication 1, **caractérisées en ce que** le charbon actif a une taille des particules ≤ 8 µm.

3. Particules expansibles de polystyrène (EPS) selon les revendications 1-2, **caractérisées en ce que** le charbon actif a une taille des particules ≤ 5 µm.

4. Particules expansibles de polystyrène (EPS) selon l'une quelconque ou plusieurs des revendications précédentes 1-3, **caractérisées en ce que** la quantité de charbon actif est de 1-15% en poids, sur base de la quantité de polystyrène.

5. Particules expansibles de polystyrène (EPS) selon la revendication 4, **caractérisées en ce que** la quantité de charbon actif est de 2-10% en poids.

6. Particules expansibles de polystyrène (EPS) selon les revendications 4-5, **caractérisées en ce que** la quantité de charbon actif est de 3-8% en poids, sur base de la quantité de polystyrène.

7. Particules expansibles de polystyrène (EPS) selon l'une quelconque ou plusieurs des revendications précédentes, **caractérisées en ce qu'**en outre, un ou plusieurs autres matériaux augmentant la valeur d'isolation thermique, choisi parmi le groupe consistant en le graphite, la poudre d'aluminium, Al(OH)₃, Mg(OH)₂ et Al₂O₃, le fer, le zinc, le cuivre et leurs alliages sont présents dans les particules expansibles de polystyrène.

8. Particules expansibles de polystyrène (EPS) selon l'une quelconque ou plusieurs des revendications précédentes, **caractérisées en ce que** le polystyrène a une taille des particules < 0,3 mm.

9. Particules expansibles de polystyrène (EPS) selon l'une quelconque ou plusieurs des revendications 1-7, **caractérisées en ce que** le polystyrène a une taille des particules > 2,4 mm.

10. Particules expansibles de polystyrène (EPS) selon l'une quelconque ou plusieurs des revendications 1-6, **caractérisées en ce que** le polystyrène a une taille des particules allant de 0,7 à 1,0 mm.

11. Particules expansibles de polystyrène (EPS) selon l'une quelconque ou plusieurs des revendications 1-6, **caractérisées en ce que** le polystyrène a une taille des particules allant de 1,0 à 2,4 mm.

12. Particules expansibles de polystyrène (EPS) selon l'une quelconque ou plusieurs des revendications précédentes, **caractérisées en ce qu'**un ou plusieurs retardateurs du feu, choisis parmi le groupe consistant en l'hexabromocyclododécane (HRCD), le peroxyde de dicumyle et le 2,3-diméthyl-2,3-diphénylbutane sont présents dans le polystyrène.

13. Particules expansibles de polystyrène (EPS) selon l'une quelconque ou plusieurs des revendications précédentes, **caractérisées en ce que** la masse spécifique du EPS se situe dans l'intervalle allant de 850 à 1050 kg/m³.

14. Procédé de préparation de particules expansibles de polystyrène (EPS) selon l'une quelconque ou plusieurs des revendications 1-13, **caractérisé en ce qu'**un polystyrène est alimenté à une extrudeuse et mélangé à au moins un agent moussant et du charbon actif ayant une taille des particules ≤ 12 µm, et est ensuite, extrudé, refroidi et réduit en particules.

15. Procédé de préparation de particules expansibles de polystyrène (EPS) selon l'une quelconque ou plusieurs des revendications 1-13, **caractérisé en ce qu'**un polystyrène est alimenté à une extrudeuse avec du charbon actif ayant une taille des particules ≤ 12 µm, après quoi le matériau intermédiaire ainsi obtenu, qui a été réduit en particules après refroidissement, est soumis à un traitement d'imprégnation avec un agent moussant de manière à obtenir un matériau qui est refroidi et qui comprend un agent moussant.

16. Procédé selon l'une quelconque des revendications 14-15, **caractérisé en ce que** du charbon actif ayant une taille des particules ≤ 8 µm, est utilisé.

17. Procédé selon l'une quelconque ou plusieurs des revendications 14-16, **caractérisé en ce que** du charbon actif ayant une taille des particules ≤ 5 µm, est utilisé.

18. Procédé selon l'une quelconque ou plusieurs des revendications 14-17, **caractérisé en ce que** le charbon actif est ajouté en une quantité allant de 1-15% en poids, sur base de la quantité de polystyrène.

19. Procédé selon la revendication 18, **caractérisé en ce que** le charbon actif est ajouté en une quantité allant de 2-10% en poids, sur base de la quantité de polystyrène.

20. Procédé selon la revendication 18, **caractérisé en ce que** le charbon actif est ajouté en une quantité allant de 3-8% en poids, sur base de la quantité de polystyrène.

21. Procédé selon l'une quelconque ou plusieurs des revendications 14-20, **caractérisé en ce que** le EPS a une masse spécifique située dans l'intervalle allant de 850 à 1050 kg/m³.

22. Matériau en mousse de polystyrène à base de particules expansibles de polystyrène selon les revendications 1-13, **caractérisé en ce que** le matériau en mousse à une masse spécifique de 9-100 kg/m³ après son expansion.

23. Matériau en mousse de polystyrène selon la revendication 22, **caractérisé en ce que** le matériau en mousse à une masse spécifique de 15-30 kg/m³ après son expansion.

24. Utilisation d'un matériau en mousse de polystyrène selon l'une ou plusieurs des revendications 22-23, pour des objets d'isolation thermique.
